# FASCICULE DE BREVET EUROPEEN

(11) **EP 2 748 020 B1**
(45) Date de publication et mention de la délivrance du brevet: **04.05.2016**
(21) Numéro de dépôt: 12775745.8
(22) Date de dépôt: 14.09.2012
(51) Int. Cl.: B60C 13/02

(54) **PNEUMATIQUE POUR VEHICULE AUTOMOBILE ROUTIER COMPRENANT DES AILETTES**
REIFEN FÜR EIN STRASSENFAHRZEUG MIT RIPPEN
TYRE FOR A ROAD VEHICLE, COMPRISING FINS

(30) Priorité: 15.09.2011 FR 1158236
(43) Date de publication de la demande: 02.07.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: GARDARIN, Benoît, F-63040 Clermont-Ferrand Cedex 9 (FR)
(74) Mandataire: Bauvir, Jacques
(86) Numéro de dépôt international: PCT/FR2012/052067
(87) Numéro de publication internationale: WO 2013/038115

(56) Documents cités:
- EP-A1- 1 834 812
- WO-A1-2009/017167
- CA-A1- 2 578 641

## Description

La présente invention concerne un pneumatique muni d'ailettes. Elle s'applique notamment, sans s'y restreindre, aux pneumatiques pour véhicules automobiles routiers de tout type notamment tourisme, moto ou poids lourds.

On connaît du document FR 2 848 174 un dispositif pour modifier les interactions entre un flux d'air et un véhicule automobile routier, en l'espèce pour réduire le coefficient de traînée du véhicule. Le dispositif comprend des moyens d'aspiration du flux d'air au niveau d'un passage de roue et des moyens d'évacuation de l'air aspiré vers l'arrière du véhicule par l'intermédiaire d'un conduit reliant le passage de roue à l'arrière du véhicule.

Toutefois, un tel dispositif nécessite de prévoir un agencement particulier des moyens d'aspiration et d'évacuation de l'air au sein du véhicule. Cet agencement varie d'un véhicule à l'autre. En outre, le dispositif est relativement complexe.

L'invention a pour but de permettre de modifier les interactions entre le flux d'air et le véhicule d'une manière plus simple et plus universelle, et en particulier d'agir sur la traînée et sur la portance du véhicule de façon à obtenir des effets techniques souhaités par le constructeur du véhicule, ou son utilisateur.

A cet effet, l'invention a pour objet un pneumatique pour véhicule automobile routier caractérisé en ce qu'il présente un sens de rotation prédéterminé, et comprend une pluralité d'ailettes pour modifier la trainée et/ou la portance du véhicule, agencées sur un flanc du pneumatique, et notamment un groupe G d'ailettes formé par au moins 60%, et de préférence la totalité des ailettes de cette pluralité d'ailettes, chaque ailette de ce groupe G d'ailettes présentant les caractéristiques suivantes :
- chaque ailette comprend une jonction avec le flanc;
- la projection de la jonction dans un plan de projection perpendiculaire à un axe de révolution du pneumatique est sensiblement droite ou sensiblement incurvée, et présente une extrémité radialement externe, dite origine ;
- l'ailette est agencée de façon à définir, dans le plan de projection, un angle α entre:
   une droite, dite de référence, passant par l'axe et l'origine, et
   une droite représentative d'une incidence moyenne de la projection de la jonction et passant par l'origine;
   l'incidence moyenne comprenant:
   - une incidence moyenne relative à l'inclinaison de la projection de la jonction à l'origine égale à un angle α1 entre la droite de référence et la tangente à la projection de la jonction à l'origine, et comprenant en outre, dans le cas ou la projection de la jonction est sensiblement incurvée :
   - une incidence moyenne relative à la courbure de la projection de la jonction égale à un angle α2 entre la tangente à la projection de la jonction à l'origine et une droite, dite moyenne, passant par l'origine, la droite moyenne et la projection de la jonction se croisant en un point d'intersection, la projection de la jonction comprenant une première portion comprise entre l'origine et le point d'intersection et une deuxième portion comprise entre l'intersection et une extrémité radialement interne de la projection de la jonction, la droite moyenne comprenant une première portion comprise entre l'origine et le point d'intersection et une deuxième portion comprise entre le point d'intersection et la projection orthogonale de l'extrémité radialement interne sur la droite moyenne, la droite moyenne étant telle que les aires comprises respectivement entre les premières portions et les deuxièmes portions de la projection de la jonction et de la droite moyenne sont sensiblement égales, l'angle α étant compté positivement dans le sens de rotation du pneumatique en partant de la droite de référence, la valeur de l'angle α appartenant au domaine prédéterminé formé par l'intervalle [- 3π/8, - π/121 et l'intervalle [0, + 3π/8], et de préférence au domaine prédéterminé formé par l'intervalle [- 3π/8, - π/8] et l'intervalle [0, + 3π/8] ;
- l'ailette s'étendant dans un intervalle ]Dₘ, D_{M}[ de distances à l'axe (X) du pneumatique, la hauteur de l'ailette évolue continuement en fonction de la distance à l'axe (X) du pneumatique, et tout point de hauteur maximale de l'ailette par rapport au flanc du pneumatique est à une distance à l'axe du pneumatique inférieure ou égale à Dₘ + 0,40 (D_{M} - Dₘ), et de préférence inférieure ou égale à Dₘ + 0,30 (D_{M} - Dₘ).

Les ailettes, qui présentent des caractéristiques particulières, agissent comme des générateurs de vortex. Chaque ailette génère, dans son sillage, un tourbillon qui modifie localement l'écoulement d'air autour du pneumatique et homogénéise globalement l'écoulement du flux d'air autour du véhicule et modifie ainsi les interactions entre le flux d'air et le véhicule.

Les inventeurs à l'origine de l'invention ont découvert que certaines interactions entre le flux d'air et le véhicule muni de pneumatiques selon l'invention, caractérisées par exemple par le coefficient de traînée ou le coefficient de portance du véhicule, étaient considérablement modifiées par rapport aux interactions entre le flux d'air et un même véhicule muni de pneumatiques analogues mais dépourvus d'ailettes, ou comprenant des ailettes ne réunissant pas l'ensemble des caractéristiques précitées.

Les ailettes du pneumatique selon l'invention constituent des organes aérodynamiques passifs qui, contrairement au dispositif de l'état de la technique, ne consomment pas d'énergie.

L'état de la technique comprend déjà des documents mentionnant des ailettes disposées sur le flanc d'un pneumatique : en particulier les documents de brevet EP 1 834 812, EP 2 236 319, WO 2009/017167, CA 2 578 641, WO 2006/130944, US 2004/126144, et WO 2010/126144. Toutefois, les ailettes présentées dans ces documents visent d'autres buts que ceux de l'invention (par exemple l'augmentation des échanges thermiques entre l'air et le pneumatique, l'évacuation d'eau présente sur la route, ou l'élimination des projection d'eau. Certains documents concernent par ailleurs des pneumatiques structurellement très différents de ceux des véhicules routiers, par exemple des pneumatiques d'avion, la fonction des ailettes étant de générer la rotation de ces pneumatiques avant l'atterrissage.

Ces différentes réalisations d'ailettes ne réunissent pas l'ensemble des caractéristiques techniques nécessaires à l'obtention, tout au moins à un niveau satisfaisant, des effets techniques précités recherchés dans le cadre de l'invention.

Dans ce qui suit, on décrira, sauf mention contraire, les caractéristiques de chacune des ailettes du seul groupe G, ce groupe comprenant avantageusement au moins 80%, et de préférence la totalité des ailettes disposées sur le flanc du pneumatique.

De façon avantageuse, pour chaque ailette, entre un point de l'ailette situé sensiblement à la distance maximum D_{M} de l'axe du pneumatique et au moins un point de l'ailette de hauteur maximale, la hauteur de l'ailette est strictement croissante sur au moins 50% de l'intervalle ]Dₘ, D_{M}[ de distances à l'axe du pneumatique, et de préférence sur la totalité de l'intervalle de distances entre ce point de l'ailette situé sensiblement à la distance maximum et ce point de l'ailette de hauteur maximale. Ainsi, la position du ou des points de la surface de l'ailette de hauteur maximale est située dans la partie de l'ailette qui est relativement éloignée de la bande de roulement, et relativement plus proche de l'axe du pneumatique. L'air qui s'engage le long de l'ailette à l'avant du pneumatique ne recontre donc pas directement une hauteur d'ailette maximale, mais avantageusement un profil du bord libre de l'ailette augmentant progressivement. Ceci convient pour l'obtention d'une canalisation progressive du flux d'air, conformément aux buts de l'invention. Pour d'autre buts, par exemple l'obtention d'une forte augmentation des transferts thermiques, ou pour écoper de l'eau sur la chaussée, on peut au contraire rechercher un profil d'ailette différent, avec un bord d'attaque de l'ailette de hauteur maximale.

Conventionnellement, la hauteur d'une ailette à une distance déterminée D de l'axe (de révolution) X du pneumatique est la distance maximale d'un point de la surface de cette ailette à la surface de base du flanc du pneumatique, parmi les points de la surface de cette ailette situés à la distance D de l'axe X.

De préférence, la position de tout point de largeur maximale du pneumatique est situé à une distance à l'axe du pneumatique (axe de révolution) inférieure à D_{M} - 0,30 (D_{M} - Dₘ), et de préférence inférieure ou égale à Dₘ. Ainsi, la position la plus favorable de l'ailette se trouve relativement proche de la bande de roulement, une partie notable de l'ailette, et typiquement au moins 50%, et de préférence la totalité de l'ailette étant située entre le point « équatorial » de largeur maximum du pneumatique et la bande de roulement. On a trouvé en effet qu'il était souhaitable que le début de l'ailette soit situé à un niveau relativement proche de la bande de roulement.

De façon avantageuse, pour chaque ailette, l'ailette ne comprend pas de point ayant la même position angulaire circonférencielle qu'un point d'une autre ailette disposée sur le flanc du pneumatique, en projection sur le plan de projection perpendiculaire à l'axe de révolution du pneumatique. Il n'y a donc pas de recouvrement radial des ailettes, en projection sur un plan perpendiculaire à l'axe de révolution du pneumatique. Ceci permet d'utiliser des ailettes canalisant des flux d'air de relativement grande largeur, et, en espaçant les ailettes, d'éviter des frottements trop importants avec les flux d'air.

Avantageusement, le nombre d'ailettes disposées le flanc du pneumatique est compris entre 10 et 32, de façon préférée entre 10 et 26, et de façon très préférée entre 11 et 22, bornes comprises.

De plus, il est préférable que chacune des ailettes ne forme pas de cavité. Les cavités induisent des tourbillons et frottements relativement importants qu'il est préférable d'éviter pour l'obtention des meilleures performances.

Le pneumatique est un pneumatique pour véhicule routier : véhicule de tourisme, ou camion, ou véhicule utilitaire, par exemple camionnette, ou autocar, ou autobus, ou motocyclette. Tous ces véhicules utilisent des pneumatiques comprenant des fils de renfort adaptés à un fonctionnement dans la gamme de pression comprise entre 0,12 Mpa et 1,0 Mpa, et de préférence entre 0,12 Mpa et 0,5 Mpa. Ils se distinguent donc clairement des pneumatiques pour avions, conçus pour des pressions de fonctionnement typiquement supérieures ou égales à 1,2 Mpa.

De préférence, les ailettes sont équi-réparties circonférentiellement sur le flanc. Par « équi-répartis circonférentiellement», on entend que chaque ailette est située sensiblement à la même distance angulaire des deux ailettes qui lui sont adjacentes. En d'autres termes, les ailettes équi-réparties présentent, deux à deux, le même écart angulaire. Le flanc pourra être, compte tenu du sens de rotation du pneumatique, un flanc extérieur ou intérieur. Les ailettes pourront être disposées sur les deux flancs. De préférence, les ailettes sont toutes identiques.

Optionnellement, chaque ailette est déformable sous l'effet du flux d'air et de préférence non articulée.

Avantageusement, le pneumatique comprend une jonction entre chaque ailette et le flanc. Cette jonction peut être continue ou discontinue.

Optionnellement, chaque ailette est venue de matière avec le flanc. En variante, chaque ailette est rapportée sur le flanc, par exemple par collage.

Dans le cas d'une ailette venue de matière avec le flanc, la jonction correspond, par exemple, à la trace laissée par l'ailette lorsque l'on découpe celle-ci en suivant la surface externe du flanc. Dans le cas d'une ailette rapportée sur le flanc, la jonction correspond, par exemple, à la trace laissée, lorsqu'on retire l'ailette du flanc, par les moyens permettant de fixer l'ailette sur le flanc.

Dans un mode de réalisation, la projection de la jonction dans un plan de projection perpendiculaire à un axe de révolution du pneumatique est sensiblement incurvée.

Dans un autre mode de réalisation, elle est sensiblement droite.

Avantageusement, pour chaque ailette (du groupe G), la valeur de l'angle (α) appartient au domaine prédéterminé formé par l'intervalle [- 3π/8, - π/12] et l'intervalle [+ π/12, + 3π/8], et de préférence au domaine formé par l'intervalle [- 3π/8, - π/8] et l'intervalle [+ π/8, + π/4].

Dans un mode de réalisation permettant de réduire le coefficient de traînée du véhicule, le domaine prédéterminé est avantageusement [0, 3π/8] et de préférence [+ π/12, + 3π/8], et de façon très préférée [+ π/8, + π/4].

Dans un mode de réalisation permettant d'augmenter le coefficient de traînée du véhicule, le domaine prédéterminé est [-π/2, 0[, de préférence [-3π/8, -π/8] et plus préférentiellement [-π/4, -π/8].

La modification du coefficient de traînée permet de modifier la résistance à l'avancement du véhicule, ce qui a pour conséquence une modification de la consommation en carburant du véhicule.

Dans un mode de réalisation permettant de réduire le coefficient de portance du véhicule, le domaine prédéterminé est [π/8, π/2], de préférence [π/4, π/2] et plus préférentiellement [3π/8, π/2].

Dans un mode de réalisation permettant d'augmenter le coefficient de portance du véhicule, le domaine prédéterminé est [-π/2, π/8[, de préférence [-3π/8, 0], de façon très préférée [- 3π/8, - π/12] et plus préférentiellement encore [-π/4, -π/8].

La modification du coefficient de portance permet de modifier l'appui du véhicule, ce qui a pour conséquence de pouvoir adapter l'adhérence du véhicule à la route.

Avantageusement, le pneumatique présente un marquage indiquant le sens de rotation prédéterminé, par exemple une flèche.

L'invention a également pour objet un véhicule automobile routier comprenant au moins un pneumatique monté sur ce véhicule, tel que défini ci-dessus. De préférence, on équipe au moins un des trains avant ou arrière ou les deux trains.

L'invention a pour autre objet l'utilisation d'un pneumatique tel que défini ci-dessus pour modifier le coefficient de trainée et/ou de portance du véhicule.

Dans un mode de réalisation, l'utilisation du pneumatique permet de réduire le coefficient de traînée du véhicule. En variante, l'utilisation du pneumatique permet d'augmenter le coefficient de traînée du véhicule.

Dans un mode de réalisation, l'utilisation du pneumatique permet de réduire le coefficient de portance du véhicule. En variante, l'utilisation du pneumatique permet d'augmenter le coefficient de portance du véhicule.

L'invention sera mieux comprise à la lecture de la description qui va suivre, donnée uniquement à titre d'exemple non limitatif et faite en se référant aux dessins dans lesquels :
- la figure 1 est une vue en perspective d'un pneumatique selon un premier mode de réalisation de l'invention comprenant un flanc et des ailettes ;
- la figure 2 est une projection du pneumatique de la figure 1 dans un plan de projection perpendiculaire à l'axe du pneumatique et illustrant des projections de jonctions entre les ailettes et le flanc du pneumatique ;
- la figure 3 est une projection d'une jonction de la figure 2 illustrant une incidence moyenne d'une projection comprenant une incidence moyenne relative à l'inclinaison de la projection et une incidence moyenne relative à la courbure de la projection ;
- la figure 4 est une vue de détail de la figure 3 ;
- la figure 5 illustre des courbes permettant de déterminer l'incidence moyenne relative à la courbure de la projection ;
- la figure 6 illustre une courbe de variation de la différence entre le coefficient de traînée d'un véhicule muni d'un pneumatique dépourvu d'ailettes et le coefficient de traînée d'un véhicule muni du pneumatique de la figure 1 en fonction de l'incidence moyenne de la projection ;
- les figures 7 et 8 sont des vues analogues à celles de la figure 3 respectivement de pneumatiques selon des deuxième et troisième modes de réalisation de l'invention ;
- la figure 9 illustre une courbe de variation de la différence entre le coefficient de traînée d'un véhicule muni d'un pneumatique analogue dépourvu d'ailettes et le coefficient de traînée d'un véhicule muni d'un pneumatique selon un quatrième mode de réalisation en fonction de l'incidence moyenne de la projection.
- La figure 10 représente une coupe axiale d'un pneumatique, dans un plan axial passant par sensiblement le milieu d'une ailette, avec une représentation légèrement modifiée de la projection du contour du bord libre de l'ailette.

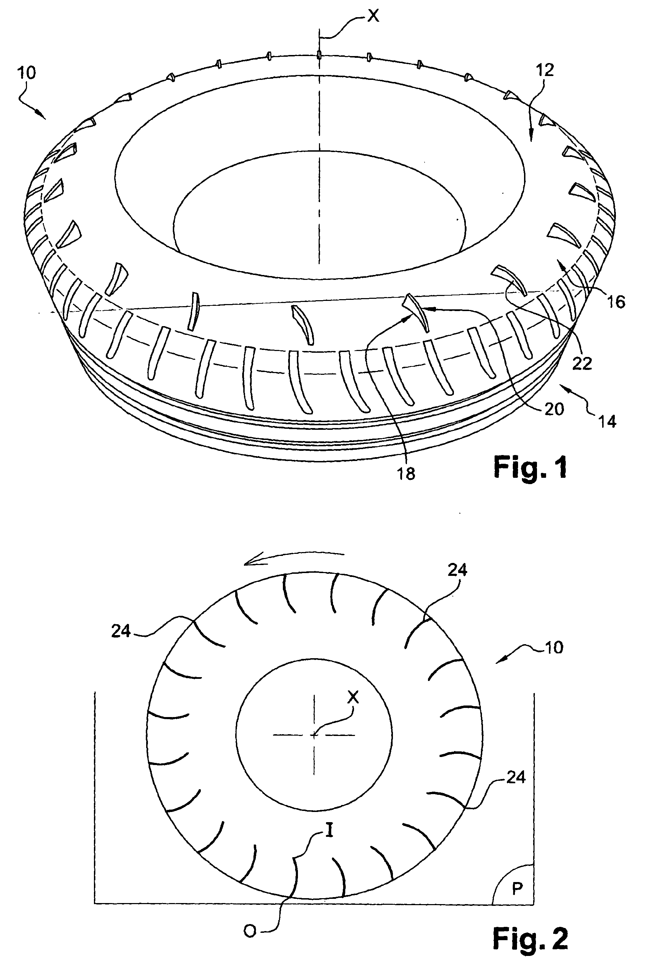

On a représenté, sur la figure 1, un pneumatique selon un premier mode de réalisation et désigné par la référence générale 10. Le pneumatique 10 est destiné à être monté sur un véhicule automobile routier et présente une forme générale toroïdale de révolution autour d'un axe X. Le pneumatique 10 comprend deux flancs 12 et une bande de roulement 14.

Le pneumatique 10 comprend des ailettes 16, ici vingt deux ailettes agencées sur un des flancs 12 du pneumatique 10 et équi-réparties circonférentiellement sur le flanc 12. De préférence, les ailettes 16 sont agencées sur le flanc extérieur du pneumatique lorsque celui-ci est monté sur le véhicule. En variante, le pneumatique 10 comprend des ailettes agencées sur les deux flancs 12.

Chaque ailette 16 comprend une surface d'attaque 18 et une surface 20 opposée à la surface d'attaque 18. Lorsque le pneumatique 10 est monté sur le véhicule, la surface d'attaque 18 entre en contact avec un flux d'air dans lequel il pénètre lorsque le véhicule avance. La surface d'attaque 18 est concave.

Chaque ailette 16 du pneumatique 10 de la figure 1 est rapportée sur le flanc 12, par exemple par collage. Avant d'être rapportée sur le flanc 12 dont elle épouse le galbe, chaque ailette 16 présente une forme générale triangulaire dont la longueur L, l'épaisseur e et la hauteur h satisfont les conditions suivantes : 0.1 H < L < H; e < L ; e < h et L > 1.5 h, H désignant la hauteur du flanc 12. En l'espèce, le flanc 12 présente une hauteur H de l'ordre de 80 mm et pour chaque ailette 16, e=2 mm, L=30 mm et h=12 mm. L'épaisseur e est sensiblement constante et sépare la surface d'attaque 18 et la surface opposée 20.

En variante, chaque ailette 16 présente une forme générale rectangulaire ou trapézoïdale.

En variante, chaque ailette 16 est venue de matière avec le flanc 12.

Le pneumatique 10 comprend une jonction 22 entre chaque ailette 16 et le flanc 12, en l'espèce une ligne de jonction 22.

On a représenté, sur la figure 2, une vue en coupe du pneumatique 10 dans un plan P perpendiculaire à l'axe X illustré sur la figure 1. En l'espèce, le plan P est le plan médian du pneumatique 10. On a également matérialisé le sens de rotation prédéterminé du pneumatique 10 par une flèche tournant dans le sens anti-horaire. Sur la figure 2, on a représenté la projection 24 de chaque ligne de jonction 22 sur le plan P. Dans ce mode de réalisation, la projection 24 de chaque ligne 22 est sensiblement incurvée.

Chaque projection 24 présente une extrémité O radialement externe, dite origine, et une extrémité I radialement interne.

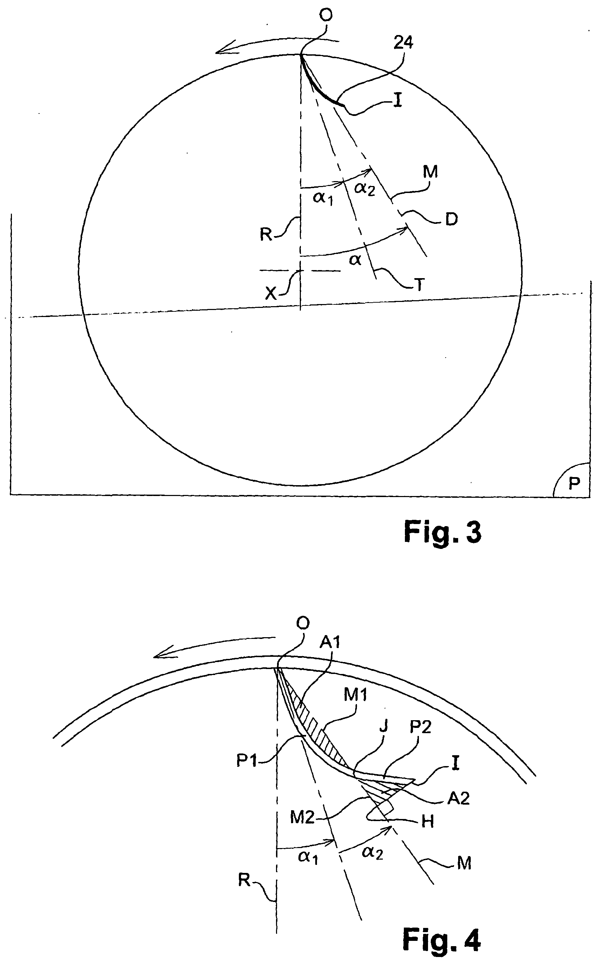

En référence à la figure 3, chaque ailette 16 est agencée de façon à définir, dans le plan P, un angle α entre une droite R, dite de référence, passant par l'axe X et l'origine O, et une droite représentative D d'une incidence moyenne de la projection 24 et passant par l'origine O.

L'incidence moyenne comprend, d'une part, une incidence moyenne relative à l'inclinaison de la projection 24 à l'origine O égale à un angle α1 entre la droite de référence R et la tangente T à la projection 24 à l'origine O et, d'autre part, une incidence moyenne relative à la courbure de la projection 24 égale à un angle α2 entre la tangente T à la projection 24 à l'origine O et une droite M, dite moyenne, passant par l'origine O. Ici, les droites D et M sont confondues.

En référence à la figure 4, la droite moyenne M et la projection 24 se croisent en un point d'intersection J. La projection 24 comprend, d'une part, une première portion P1 comprise entre l'origine O et le point d'intersection J et, d'autre part, une deuxième portion P2 comprise entre l'intersection J et l'extrémité I.

La droite moyenne M comprend une première portion M1 comprise entre l'origine O et le point d'intersection J et une deuxième portion M2 comprise entre le point d'intersection J et la projection orthogonale H de l'extrémité 1 sur la droite moyenne M.

La droite moyenne M est telle que l'aire A1 comprise entre la première portion P1 de la projection 24 et la première portion M1 de la droite moyenne M est sensiblement égale à l'aire A2 comprise entre la deuxième portion P2 de la projection 24 et la deuxième portion M2 de la droite moyenne M.

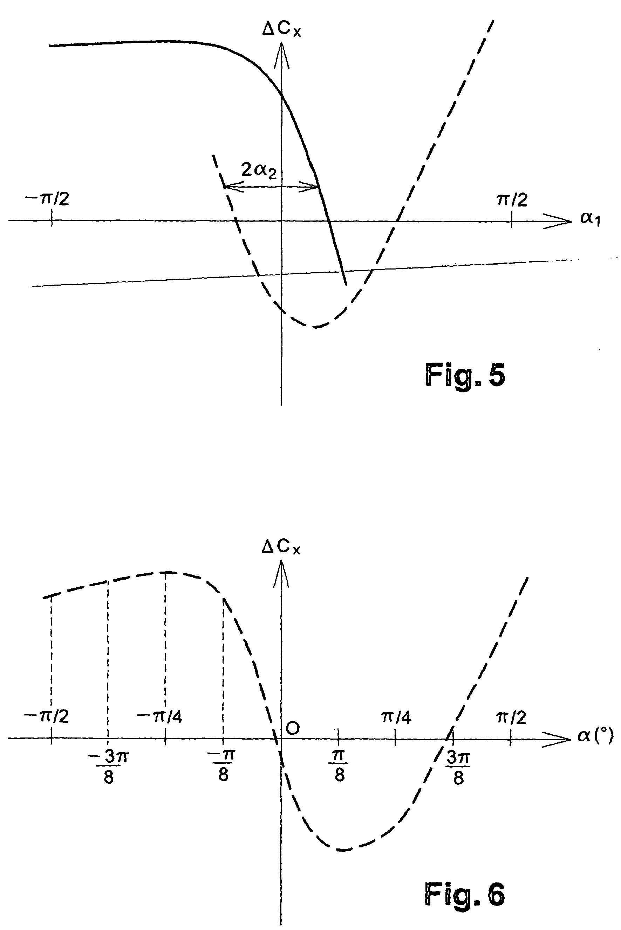

On va maintenant décrire, en référence à la figure 5, une méthode de détermination de l'angle α2 correspondant à l'incidence moyenne relative à la courbure de chaque projection 24.

On fabrique une série de pneumatiques Pi pour véhicule automobile routier. Les ailettes 16 de tous les pneumatiques Pi présentent une incidence moyenne relative à la courbure identique. Les ailettes 16 de chaque pneumatique Pi présente une incidence moyenne relative à l'inclinaison qui varie selon les pneumatiques Pi. Ainsi, chaque pneumatique Pi est caractérisé par un couple d'angles {α1, i; α2} correspondant respectivement à incidence moyenne relative à l'inclinaison et à l'incidence moyenne relative à la courbure.

Dans une première série de mesures, on monte chaque pneumatique Pi sur un véhicule automobile routier de façon à ce que son sens de rotation soit respecté et on mesure le coefficient de traînée Cx du véhicule. On équipe toutes les roues du même pneumatique Pi. L'incidence moyenne de chaque ailette de chaque pneumatique Pi de cette première série de mesures est égale à un angle αA tel que αA=α1,i+α2. On mesure également le coefficient de traînée Cx,0 du même véhicule muni d'un pneumatique analogue dépourvu d'ailettes. Pour chaque pneumatique Pi, on obtient alors la différence ΔCx=Cx-Cx,0, c'est-à-dire le gain en coefficient de traînée. On en déduit la variation du gain en coefficient de traînée en fonction de l'angle α1 (courbe continue).

Dans une deuxième série de mesures, on monte chaque pneumatique Pi sur le même véhicule automobile routier de façon à ce que son sens de rotation soit inversé. En l'espèce, on change, par rapport à la première série de mesures, le côté du véhicule sur lequel le pneumatique est monté. L'incidence moyenne de chaque ailette de chaque pneumatique Pi de cette deuxième série de mesures est égale à un angle αB tel que αB=α1,i-α2. De façon analogue à la première série de mesures, on obtient la variation du gain en coefficient de traînée en fonction de l'angle α1 (courbe en traits pointillés).

Puis, on détermine l'écart angulaire séparant les deux courbes pour ΔCx=0. L'écart angulaire correspond à la différence entre αA et αB soit 2*α2. On en déduit alors α2.

On a représenté, sur la figure 6, une courbe permettant de déterminer le gain en coefficient de traînée ΔCx=Cx-Cx,0 d'un véhicule en fonction de l'angle α correspondant à l'incidence moyenne dans lequel Cx est le coefficient de traînée d'un véhicule muni de pneumatiques selon le premier mode de réalisation et Cx,0 est le coefficient de traînée d'un véhicule muni de pneumatiques analogues dépourvus d'ailettes. Les ailettes 16 permettent de modifier localement l'écoulement d'air autour du pneumatique 10 de façon à modifier l'écoulement d'air autour du véhicule. L'angle α étant compté positivement dans le sens de rotation du pneumatique 10 en partant de la droite de référence R, un angle α ayant une valeur appartenant à l'intervalle [0, 3π/8] permet de réduire le coefficient de traînée Cx du véhicule et donc la résistance à l'avancement du véhicule. En effet, comme illustré sur la figure 6, pour un tel angle α, le coefficient de traînée Cx d'un véhicule muni de pneumatiques selon le premier mode de réalisation est plus petit que le coefficient de traînée Cx,0 d'un véhicule muni de pneumatiques analogues dépourvus d'ailettes.

De préférence, l'angle α appartient à l'intervalle [π/12, π/4], et de façon très préférée à l'intervalle [-π/8, π/4]. Cet intervalle permet d'obtenir une valeur minimale du coefficient de traînée Cx.

En variante, l'angle α appartient à l'intervalle [-π/2, 0[, de préférence [-3π/8, -π/8] et très préférentiellement [-π/4, -π/8]. Ces intervalles permettent d'obtenir une valeur maximale du coefficient de traînée Cx.

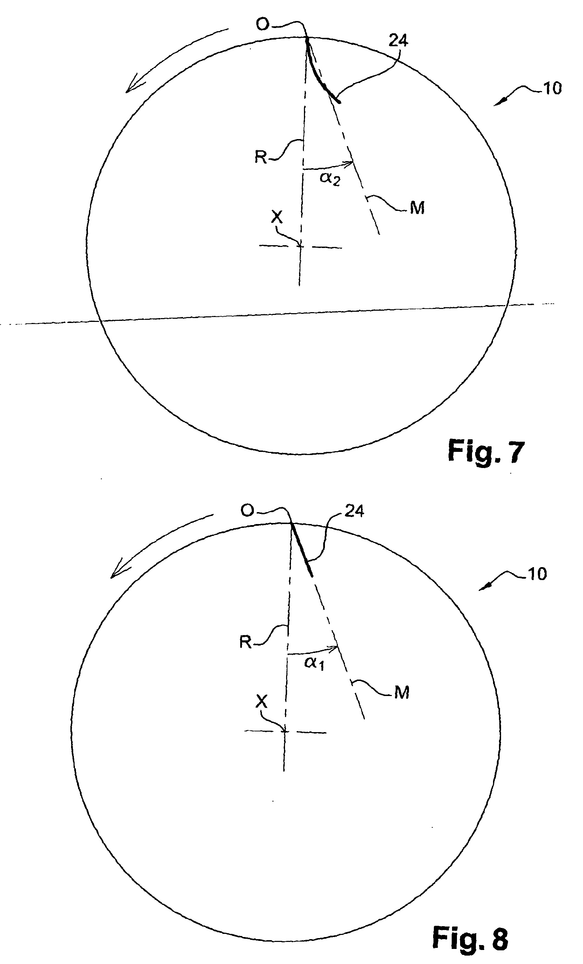

On a représenté sur les figures 7 et 8 des projections de pneumatiques selon des deuxième et troisième modes de réalisation de l'invention. Les éléments analogues à ceux représentés sur les figures précédentes sont désignés par des références identiques.

A la différence du pneumatique 10 selon le premier mode de réalisation, l'incidence moyenne de la projection 24 du pneumatique de la figure 7 est égale à l'incidence moyenne relative à la courbure. En effet, la projection 24 est sensiblement parallèle à la droite R à l'origine O. En d'autres termes, α=α2 et α1=0.

A la différence du pneumatique 10 selon le premier mode de réalisation, l'incidence moyenne de la projection 24 du pneumatique de la figure 8 est égale à l'incidence moyenne relative à l'inclinaison. Ainsi, la projection 24 est sensiblement rectiligne. En d'autres termes, α=α1 et α2=0.

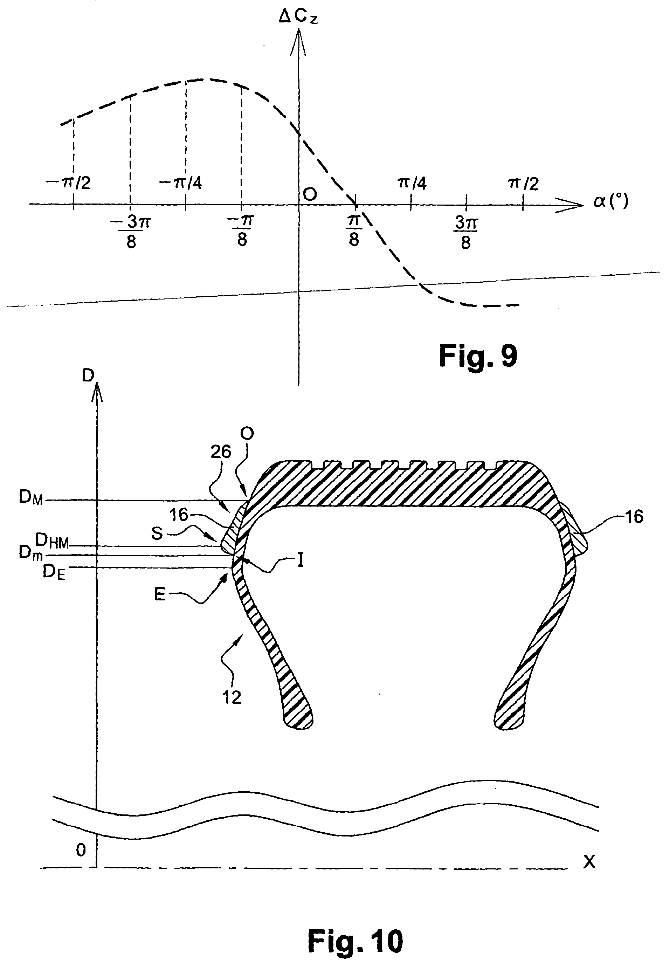

On a représenté sur la figure 9 une courbe permettant de déterminer le gain en coefficient de portance ΔCz=Cz-Cz,0 en fonction de l'angle α correspondant à l'incidence moyenne dans lequel Cz est le coefficient de portance d'un véhicule muni de pneumatiques selon un quatrième mode de réalisation et Cz,0 est le coefficient de portance d'un véhicule muni de pneumatiques analogues dépourvus d'ailettes.

Les ailettes 16 permettent de modifier localement l'écoulement d'air autour du pneumatique 10 de façon à modifier l'écoulement d'air autour du véhicule. L'angle α étant compté positivement dans le sens de rotation du pneumatique 10 en partant de la droite de référence R, un angle α ayant une valeur appartenant à l'intervalle [π/8, π/2] permet de réduire le coefficient de portance Cz du véhicule et donc d'augmenter l'appui du véhicule. En effet, comme illustré sur la figure 9, pour un tel angle α, le coefficient de portance Cz d'un véhicule muni de pneumatiques selon le quatrième mode de réalisation est plus petit que le coefficient de portance Cz,0 d'un véhicule muni de pneumatiques analogues dépourvus d'ailettes.

De préférence, l'angle α appartient à l'intervalle [π/4, π/2] et plus préférentiellement à l'intervalle [3π/8, π/2]. Ces intervalles permettent d'obtenir une valeur minimale du coefficient de portance Cz.

En variante, l'angle α appartient à l'intervalle [-π/2, π/8[, de préférence [-3π/8, 0] ou [- 3π/8, - π/12], et de façon très préférée [-π/4, -π/8]. Ces intervalles permettent d'obtenir une valeur maximale du coefficient de portance Cz.

La figure 10 représente une coupe axiale d'un pneumatique, dans un plan axial passant par sensiblement le milieu d'une ailette, avec une représentation légèrement modifiée de la projection du contour 26 du bord libre de l'ailette 16. La représentation de ce contour 26 de l'ailette est très légèrement déformée, par rapport à une projection classique, du fait que l'ailette ne s'étend pas dans le plan de projection : on a en effet représenté chaque point du contour de l'ailette exactement à sa distance réelle de l'axe de révolution X du pneumatique, avec la hauteur réelle d'ailette correspondant à cette distance.

L'ailette part donc du point origine O, à une distance D_{M} de l'axe X. Sa hauteur augmente continuement jusqu'à un point de hauteur maximale, ou sommet S de l'ailette, situé à une distance D_{HM} de l'axe X, puis diminue rapidement jusqu'à atteindre la valeur 0 à l'extrémité I de l'ailette, correspondant à la distance Dₘ de l'axe X. Au niveau de l'extrémité I, le contour présente un angle de dépouille, par exemple compris entre 4° et 35° par rapport à la perpendiculaire au flanc du pneumatique, permettant d'obtenir un démoulage aisé, lorsque l'ailette est venue de matière avec le pneumatique.

Comme on peut le voir sur la figure 10, la valeur de D_{HM} est beaucoup plus proche de celle de Dₘ que de celle de D_{M}. En d'autres termes, le sommet S de l'ailette est beaucoup plus près de l'extrémité I de l'ailette que de son origine O.

De plus, l'ailette est située près de la bande de roulement du pneumatique, au dessus d'un point E « équatorial» du pneumatique, c'est à dire d'un point du flanc correspondant à une largeur maximale. Ainsi, l'ailette de la figure 12 s'étend de façon profilée dans la zone comprise entre la bande de roulement et la zone équatoriale du pneumatique.

L'invention ne se limite pas aux modes de réalisation précédemment décrits.

En effet, on pourra combiner les caractéristiques des différents modes de réalisation dans la mesure où celles-ci sont compatibles entre elles.

En particulier, on pourra prévoir un pneumatique permettant de modifier à la fois la résistance à l'avancement et l'appui du véhicule conformément aux buts particuliers d'un constructeur automobile, ou d'un utilisateur du véhicule.

## Revendications

1. Pneumatique (10) pour véhicule automobile routier, présentant un sens de rotation prédéterminé, et comprenant une pluralité d'ailettes (16) pour modifier la trainée et/ou la portance du véhicule, agencées sur un flanc (12) du pneumatique, et notamment un groupe G d'ailettes formé par au moins 60%, et de préférence la totalité des ailettes de cette pluralité d'ailettes (16), chaque ailette (16) de ce groupe G d'ailettes présentant les caractéristiques suivantes :
- chaque ailette (16) comprend une jonction (22) avec le flanc (12) ;
- la projection (24) de la jonction (22) dans un plan (P) de projection perpendiculaire à un axe (X) de révolution du pneumatique (10) est sensiblement droite ou sensiblement incurvée, et présente une extrémité radialement externe (O), dite origine ;
- l'ailette (16) est agencée de façon à définir, dans le plan de projection (P), un angle (α) entre:
· une droite (R), dite de référence, passant par l'axe et l'origine, et une droite (D) représentative d'une incidence moyenne de la projection (24) de la jonction (22) et passant par l'origine (O) ;
l'incidence moyenne comprenant :
• une incidence moyenne relative à l'inclinaison de la projection (24) de la jonction (22) à l'origine (O) égale à un angle (α1) entre la droite de référence (R) et la tangente (T) à la projection (24) de la jonction (22) à l'origine (O), et comprenant en outre, dans le cas ou la projection de la jonction est sensiblement incurvée :
• une incidence moyenne relative à la courbure de la projection (24) de la jonction (22) égale à un angle (α2) entre la tangente (T) à la projection de la jonction (22) à l'origine (O) et une droite (M), dite moyenne, passant par l'origine (O), la droite moyenne (M) et la projection (24) de la jonction (22) se croisant en un point d'intersection (J), la projection (24) de la jonction (22) comprenant une première portion (P1) comprise entre l'origine (O) et le point d'intersection (J) et une deuxième portion (P2) comprise entre l'intersection (J) et une extrémité radialement interne (I) de la projection (24) de la jonction (22), la droite moyenne (M) comprenant une première portion (M1) comprise entre l'origine (O) et le point d'intersection (J) et une deuxième portion (M2) comprise entre le point d'intersection (J) et la projection orthogonale (H) de l'extrémité radialement interne (I) sur la droite moyenne (M), la droite moyenne (M) étant telle que les aires (A1, A2) comprises respectivement entre les premières portions (P1, M1) et les deuxièmes portions (P2, M2) de la projection (24) de la jonction (22) et de la droite moyenne (M) sont sensiblement égales, l'angle (α) étant compté positivement dans le sens de rotation du pneumatique (10) en partant de la droite de référence (R), la valeur de l'angle (α) appartenant au domaine prédéterminé formé par l'intervalle [- 3π/8, - π/12] et l'intervalle [0, + 3π/8], et de préférence au domaine prédéterminé formé par l'intervalle [- 3π/8, - π/8] et l'intervalle [0, + 3π/8] ; le pneumatique étant **caractérisé en ce que**
- l'ailette s'étend dans un intervalle ]Dₘ, D_{M}[ de distances à l'axe (X) du pneumatique, la hauteur de l'ailette évolue continuement en fonction de la distance à l'axe (X) du pneumatique, et tout point de hauteur maximale de l'ailette par rapport au flanc du pneumatique est à une distance à l'axe (X) du pneumatique inférieure ou égale à Dₘ + 0,40 (D_{M} - Dₘ), et de préférence inférieure ou égale à Dₘ + 0,30 (D_{M}-Dₘ).

2. Pneumatique selon la revendication 1, dans lequel, pour chaque ailette (16) du groupe G, la valeur de l'angle (α) appartient au domaine formé par l'intervalle [-3π/8, - π/12] et l'intervalle [+ π/12, + 3π/8].

3. Pneumatique selon l'une des revendications 1 ou 2, dans lequel, pour chaque ailette du groupe G, la valeur de l'angle (α) appartient au domaine formé par l'intervalle [- π/4, - π/8] et l'intervalle [+ π/8, + π/4].

4. Pneumatique selon la revendication 2, dans lequel, pour chaque ailette du groupe G, la valeur de l'angle (α) appartient à l'intervalle [+ π/12, + 3π/8], et de préférence [+ π/8, + π/4].

5. Pneumatique selon la revendication 2, dans lequel, pour chaque ailette du groupe G, la valeur de l'angle (α) appartient à l'intervalle [- 3π/8, - π/12], et de préférence [- π/4, - π/8].

6. Pneumatique selon l'une quelconque des revendications 1 à 5, dans lequel, pour chaque ailette du groupe G, entre un point de l'ailette situé sensiblement à la distance maximum D_{M} de l'axe du pneumatique et au moins un point de l'ailette de hauteur maximale, la hauteur de l'ailette est strictement croissante sur au moins 50% de l'intervalle ]Dₘ, D_{M}[ de distances à l'axe du pneumatique, et de préférence sur la totalité de l'intervalle de distances entre ce point de l'ailette situé sensiblement à la distance maximum et ce point de l'ailette de hauteur maximale.

7. Pneumatique selon l'une quelconque des revendications 1 à 6, dans lequel la position de tout point de largeur maximale du pneumatique est situé à une distance à l'axe du pneumatique inférieure à D_{M} - 0,30 (D_{M} - Dₘ), et de préférence inférieure ou égale à Dₘ.

8. Pneumatique selon l'une quelconque des revendications 1 à 7, dans lequel, pour chaque ailette du groupe G, l'ailette ne comprend pas de point ayant la même position angulaire circonférencielle qu'un point d'une autre ailette disposée sur le flanc du pneumatique, en projection sur le plan (P) de projection perpendiculaire à l' axe (X) de révolution du pneumatique (10).

9. Pneumatique selon l'une quelconque des revendications 1 à 8, dont le nombre d'ailettes disposées son flanc (12) est compris entre 10 et 28, de préférence entre 11 et 22, bornes comprises, chacune de ces ailettes appartenant au groupe G.

10. Pneumatique selon l'une quelconque des revendications 1 à 9, dans lequel chacune des ailettes du groupe G ne forme pas de cavité.

11. Pneumatique selon l'une quelconque des revendications 1 à 10, comprenant des fils de renfort adaptés à un fonctionnement dans la gamme de pression comprise entre 0.12 Mpa et 1,0 Mpa, et de préférence entre 0.12 Mpa et 0, 5 Mpa.

12. Pneumatique selon l'une quelconque des revendications 1 à 11, présentant un marquage indiquant le sens de rotation prédéterminé.

13. Véhicule automobile routier, **caractérisé en ce qu**'il comprend au moins un pneumatique (10) monté sur ce véhicule, selon l'une quelconque des revendications 1 à 12.

14. Utilisation d'un pneumatique (10) selon l'une quelconque des revendications 1 à 12 pour modifier le coefficient de trainée et/ou de portance du véhicule.

15. Utilisation d'un pneumatique (10) selon la revendication 14 pour réduire le coefficient de trainée du véhicule.

16. Utilisation d'un pneumatique (10) selon la revendication 14 ou 15 pour réduire le coefficient de portance du véhicule.

## Patentansprüche

1. Reifen (10) für Straßenkraftfahrzeug, welcher eine vorgegebene Drehrichtung vorweist und eine Vielzahl von Flügeln (16) aufweist, um den Widerstand und/oder den Auftrieb des Fahrzeug zu modifizieren, welche an einer Flanke (12) des Reifens angebracht sind, und insbesondere eine Gruppe G von Flügeln aufweist, welche von mindestens 60%, und vorzugsweise von der Gesamtheit der Flügel dieser Vielzahl von Flügeln (16) gebildet wird, wobei jeder Flügel (16) dieser Gruppe G von Flügeln die folgenden Merkmale aufweist:
- jeder Flügel (16) weist eine Verbindung (22) mit der Flanke (12) auf;
- die Projektion (24) der Verbindung (22) auf eine Projektionsebene (P), welche senkrecht auf einer Drehachse (X) des Reifens (10) steht, ist im Wesentlichen gerade oder im Wesentlichen gekrümmt und weist ein radial äußeres Ende (0) auf, so genannter Ursprung;
- der Flügel (16) ist derartig angelegt, um in der Projektionsebene (P) einen Winkel (α) zu definieren, und zwar zwischen:
• einer Gerade (R), so genannte Bezugsgerade, welche durch die Achse und den Ursprung verläuft, und
• einer Gerade (D), welche repräsentativ für eine mittleren Inzidenz der Projektion (24) der Verbindung (22) ist und durch den Ursprung (0) verläuft; wobei die mittlere Inzidenz Folgendes aufweist:
• eine mittlere Inzidenz in Bezug auf die Neigung der Projektion (24) der Verbindung (22) im Ursprung (0), welche gleich einem Winkel (α1) zwischen der Bezugsgeraden (R) und der Tangente (T) an die Projektion (24) der Verbindung (22) im Ursprung (0) ist, und außerdem im Fall, dass die Projektion der Verbindung im Wesentlichen gekrümmt ist Folgendes aufweist:
• eine mittlere Inzidenz in Bezug auf die Krümmung der Projektion (24) der Verbindung (22), welche gleich einem Winkel (α2) zwischen der Tangente (T) zur Projektion der Verbindung (22) im Ursprung (0) und einer Geraden (M), so genannte mittlere Gerade, ist, welche durch den Ursprung (0) verläuft, wobei die mittlere Gerade (M) und die Projektion (24) der Verbindung (22) sich in einem Schnittpunkt (J) kreuzen, wobei die Projektion (24) der Verbindung (22) einen ersten Abschnitt (P1), der zwischen dem Ursprung (0) und dem Schnittpunkt (J) liegt, und einen zweiten Abschnitt (P2) aufweist, der zwischen dem Schnittpunkt (J) und einem radial inneren Ende (I) der Projektion (24) der Verbindung (22) liegt, wobei die mittlere Gerade (M) einen ersten Abschnitt (M1), welcher zwischen dem Ursprung (0) und dem Schnittpunkt (J) liegt, und einen zweiten Abschnitt (M2) aufweist, welcher zwischen dem Schnittpunkt (J) und der senkrechten Projektion (H) des radial inneren Endes (I) auf die mittlere Gerade (M) liegt, wobei die mittlere Gerade (M) derartig ist, dass die Flächeninhalte (A1, A2), welche jeweils zwischen den ersten Abschnitten (P1, M1) und den zweiten Abschnitten (P2, M2) der Projektion (24) der Verbindung (22) und der mittleren Gerade (M) liegen, im Wesentlichen gleich sind, wobei der Winkel (α) in der Drehrichtung des Reifens (10) ausgehend von der Bezugsgeraden (R) positiv gerechnet wird, wobei der Wert des Winkels (α) in dem vorgegebenen Bereich liegt, welcher von dem Intervall [- 3π/8, - n/12] und dem Intervall [0, + 3π/8] gebildet wird, und vorzugsweise in dem vom Intervall [- 3π/8, - π/8] und dem Intervall [0, + 3π/8] gebildeten vorgegebenen Bereich; wobei der Reifen **dadurch gekennzeichnet ist, dass**
- der Flügel sich in einem Intervall ]Dm, D_{M}[ von Abständen zur Achse (X) des Reifens erstreckt, wobei sich die Höhe des Flügels kontinuierlich in Abhängigkeit des Abstandes zur Achse (X) des Flügels verändert, und sich jeder Punkt von maximaler Höhe des Flügels in Bezug auf die Flanke des Reifens in einem Abstand zur Achse (X) des Reifens befindet, welcher kleiner oder gleich Dₘ + 0,40 (D_{M} - Dₘ), und vorzugsweise kleiner oder gleich Dₘ + 0,30 (D_{M} - Dₘ) ist.

2. Reifen nach Anspruch 1, bei welchem für jeden Flügel (16) der Gruppe G der Wert des Winkels (α) in dem von dem Intervall [- 3π/8, - n/12] und dem Intervall [+ π/12, + 3π/8] gebildeten Bereich liegt.

3. Reifen nach einem der Ansprüche 1 oder 2, bei welchem für jeden Flügel der Gruppe G der Wert des Winkels (α) in dem von dem Intervall [- π/4, - n/8] und dem Intervall [+ π/8, + π/4] gebildeten Bereich liegt.

4. Reifen nach Anspruch 2, bei welchem für jeden Flügel der Gruppe G der Wert des Winkels (α) in dem von dem Intervall [+ π/12, + 3π/8], und vorzugsweise [+ π/8, + π/4], gebildeten Bereich liegt.

5. Reifen nach Anspruch 2, bei welchem für jeden Flügel der Gruppe G der Wert des Winkels (α) in dem von dem Intervall [- 3π/8, - π/12], und vorzugsweise [-π/4, - π/8], gebildeten Bereich liegt.

6. Reifen nach einem der Ansprüche 1 bis 5, bei welchem für jeden Flügel der Gruppe G zwischen einem Punkt des Flügels, welcher im Wesentlichen im maximalen Abstand D_{M} von der Achse des Reifens angeordnet ist, und mindestens eines Punktes des Flügels von maximaler Höhe, die Höhe unbedingt über mindestens 50% des Intervalls ]Dₘ, D_{M}[ von Abständen zur Achse der Reifens anwächst, und vorzugsweise über die Gesamtheit des Intervalls von Abständen zwischen diesem Punkt des Flügels, welcher im Wesentlichen im maximalen Abstand angeordnet ist, und diesem Punkt mit maximaler Höhe des Flügels.

7. Reifen nach einem der Ansprüche 1 bis 6, bei welchem sich die Position von jedem Punkt von maximaler Breite des Reifens in einem Abstand von der Achse des Reifens befindet, welcher kleiner als D_{M} - 0,30 (D_{M}-Dₘ) ist, und vorzugsweise kleiner oder gleich Dₘ ist.

8. Reifen nach einem der Ansprüche 1 bis 7, bei welchem für jeden Flügel der Gruppe G der Flügel keinen Punkt aufweist, welcher dieselbe anguläre Umfangsposition besitzt wie ein Punkt eines anderen auf der Flanke des Reifens angeordneten Flügels bei der Projektion auf die Projektionsebene (P) senkrecht zur Drehachse (X) des Reifens (10).

9. Reifen nach einem der Ansprüche 1 bis 8, dessen Anzahl von Flügeln, welche auf seiner Flanke (12) angeordnet sind, zwischen 10 und 28, vorzugsweise zwischen 11 und 22, einschließlich, liegt, wobei jeder dieser Flügel zur Gruppe G gehört.

10. Reifen nach einem der Ansprüche 1 bis 9, bei welchem keiner der Flügel der Gruppe G einen Hohlraum bildet.

11. Reifen nach einem der Ansprüche 1 bis 10, aufweisend Verstärkungsfäden, welche für einen Betrieb in dem Druckbereich angepasst sind, welcher zwischen 0.12 Mpa und 1,0 Mpa, und vorzugsweise zwischen 0.12 Mpa und 0,5 Mpa liegt.

12. Reifen nach einem der Ansprüche 1 bis 11, welcher eine Kennzeichnung aufweist, welche die vorgegebene Drehrichtung angibt.

13. Straßenkraftfahrzeug, **dadurch gekennzeichnet, dass** es wenigstens einen an diesem Fahrzeug montierten Reifen (10) nach einem der Ansprüche 1 bis 12 aufweist.

14. Verwendung eines Reifens (10) nach einem der Ansprüche 1 bis 12, um den Widerstands- und/oder Auftriebskoeffizienten des Fahrzeugs zu modifizieren.

15. Verwendung eines Reifens (10) nach Anspruch 14, um den Widerstandskoeffizienten des Fahrzeugs zu reduzieren.

16. Verwendung eines Reifens (10) nach Anspruch 14 oder 15, um den Auftriebskoeffizienten des Fahrzeugs zu reduzieren.

## Claims

1. Tyre (10) for a road vehicle, having a predetermined direction of rotation and comprising a plurality of fins (16) for modifying the drag and/or lift of the vehicle, arranged on a sidewall (12) of the tyre, and notably a group G of fins formed by at least 60%, and preferably all, of the fins of this plurality of fins (16), each fin (16) of this group G of fins having the following characteristics:
- each fin (16) comprises a junction (22) with the sidewall (12);
- the projection (24) of the junction (22) in a projection plane (P) perpendicular to an axis (X) of revolution of the tyre (10) is substantially straight or substantially curved, and has a radially outer end (O) called the origin;
- the fin (16) is arranged so as to form, in the projection plane (P), an angle (α) between:
a straight line (R), called the reference line, passing through the axis and the origin, and
a straight line (D) representing an average pitch of the projection (24) of the junction (22) and passing through the origin (O);
the average pitch comprising:
• an average pitch in relation to the inclination of the projection (24) of the junction (22) at the origin (O), equal to an angle (α1) between the reference line (R) and the tangent (T) to the projection (24) of the junction (22) at the origin (O), and further comprising, in the case in which the projection of the junction is substantially curved:
• an average pitch in relation to the curvature of the projection (24) of the junction (22), equal to an angle (α2) between the tangent (T) to the projection of the junction (22) at the origin (O) and a straight line (M), called the average line, passing through the origin (O), the average line ((M) and the projection (24) of the junction (22) crossing each other at an intersection point (J), the projection (24) of the junction (22) comprising a first portion (P1) lying between the origin (O) and the intersection point (J) and a second portion (P2) lying between the intersection (J) and a radially inner end (I) of the projection (24) of the junction (22), the average line (M) comprising a first portion (M1) lying between the origin (O) and the intersection point (J) and a second portion (M2) lying between the intersection point (J) and the orthogonal projection (H) of the radially inner end (I) on the average line (M), the average line (M) being such that the areas (A1, A2) lying between, respectively, the first portions (P1, M1) and the second portions (P2, M2) of the projection (24) of the junction (22) and the average line (M) are substantially equal, the angle (α) being counted positively in the direction of rotation of the tyre (10), starting from the reference line (R), the value of the angle (α) belonging to the predetermined domain formed by the range [-3π/8, - π/12] and the range [0, + 3π/8], and preferably to the predetermined domain formed by the range [- 3π/8, - π/8] and the range [0, + 3π/8]; the tyre being **characterized in that**:
- the fin extending within a range ]Dₘ, D_{M}[ of distances from the axis (X) of the tyre, the height of the fin varying continuously as a function of the distance from the axis (X) of the tyre, while every point of maximum height of the fin with respect to the sidewall of the tyre is at a distance from the axis (X) of the tyre which is less than or equal to Dₘ + 0.40 (D_{M} - Dₘ), and preferably less than or equal to Dₘ + 0.30 (D_{M} - Dₘ).

2. Tyre according to Claim 1, wherein, for each fin (16) of the group G, the value of the angle (α) belongs to the domain formed by the range
[- 3π/8, - π/12] and the range [+ π/12, + 3π/8].

3. Tyre according to either of Claims 1 and 2, wherein, for each fin of the group G, the value of the angle (α) belongs to the domain formed by the range [- π/4, - π/8] and the range [+ π/8, + π/4].

4. Tyre according to Claim 2, wherein, for each fin of the group G, the value of the angle (α) belongs to the range [+ π/12, + 3π/8], and preferably to the range [+ π/8, + π/4].

5. Tyre according to Claim 2, wherein, for each fin of the group G, the value of the angle (α) belongs to the range [- 3π/8, - π/12], and preferably to the range [- π/4, - π/8].

6. Tyre according to any one of Claims 1 to 5, wherein, for each fin of the group G, between a point of the fin located substantially at the maximum distance D_{M} from the axis of the tyre and at least one point of maximum height of the fin, the height of the fin increases constantly over at least 50% of the range ]Dₘ, D_{M}[ of distances from the axis of the tyre, and preferably over the whole range of distances between this point of the fin located substantially at the maximum distance and this point of maximum height of the fin.

7. Tyre according to any one of Claims 1 to 6, wherein the position of any point of maximum width of the tyre is located at a distance from the axis of the tyre which is less than D_{M} - 0.30 (D_{M} - Dₘ), and preferably less than or equal to Dₘ.

8. Tyre according to any one of Claims 1 to 7, wherein, for each fin of the group G, the fin does not comprise any point having the same circumferential angular position as any point of another fin located on the sidewall of the tyre, in projection on the projection plane (P) perpendicular to the axis (X) of revolution of the tyre (10).

9. Tyre according to any one of Claims 1 to 8, in which the number of fins arranged on the sidewall (12) is in the range from 10 to 28, preferably from 11 to 22, inclusive, each of these fins belonging to the group G.

10. Tyre according to any one of Claims 1 to 9, wherein each of the fins of the group G does not form a cavity.

11. Tyre according to any one of Claims 1 to 10, comprising reinforcing threads suitable for operation in the pressure range from 0.12 MPa to 1.0 MPa, and preferably from 0.12 MPa to 0.5 MPa.

12. Tyre according to any one of Claims 1 to 11, bearing a mark indicating the predetermined direction of rotation.

13. Road vehicle, **characterized in that** it comprises at least one tyre (10) mounted on this vehicle, according to any one of Claims 1 to 12.

14. Use of a tyre (10) according to any one of Claims 1 to 12 for modifying the drag coefficient and/or the lift coefficient of the vehicle.

15. Use of a tyre (10) according to Claim 14 for reducing the drag coefficient of the vehicle.

16. Use of a tyre (10) according to Claim 14 or 15 for reducing the lift coefficient of the vehicle.
